(19) Europäisches Patentamt

European Patent Office

Office européen des brevets

(11) **EP 0 874 440 B1**

(12) **FASCICULE DE BREVET EUROPEEN**

(45) Date de publication et mention
de la délivrance du brevet:
**04.12.2002 Bulletin 2002/49**

(51) Int Cl.⁷: **H02J 9/06**

(21) Numéro de dépôt: **98400966.2**

(22) Date de dépôt: **20.04.1998**

(54) **Système et procédé d'alimentation en énergie électrique d'équipements électroniques**

Vorrichtung und Verfahren zur Stromversorugung von elektronischen Einrichtungen

System and method for supplying electrical power to electronic devices

(84) Etats contractants désignés:
**BE CH DE ES FR GB IT LI NL SE**

(30) Priorité: **21.04.1997 FR 9704879**

(43) Date de publication de la demande:
**28.10.1998 Bulletin 1998/44**

(73) Titulaire: **ALCATEL**
**75008 Paris (FR)**

(72) Inventeur: **Gabillet,, Jean-Paul**
**22300 Ploumilliau (FR)**

(74) Mandataire: **Lamoureux, Bernard et al**
**Compagnie Financiere Alcatel,**
**Département D.P.I.,**
**30, avenue Kléber**
**75016 Paris (FR)**

(56) Documents cités:
**EP-A- 0 575 101         EP-A- 0 578 531**
**EP-A- 0 696 831         GB-A- 2 241 394**

**Description**

Le domaine de l'invention est celui de l'alimentation en énergie électrique d'équipements électroniques. Plus précisément, l'invention concerne les systèmes d'alimentation de type secourus, qui comprennent des moyens permettant d'assurer la continuité de la distribution d'énergie électrique, même en cas de défaillance de la source d'énergie principale.

L'invention s'applique notamment, mais non exclusivement, aux systèmes de télécommunication et/ou de traitement de l'information, qui regroupent sur un même site une pluralité d'équipements distincts.

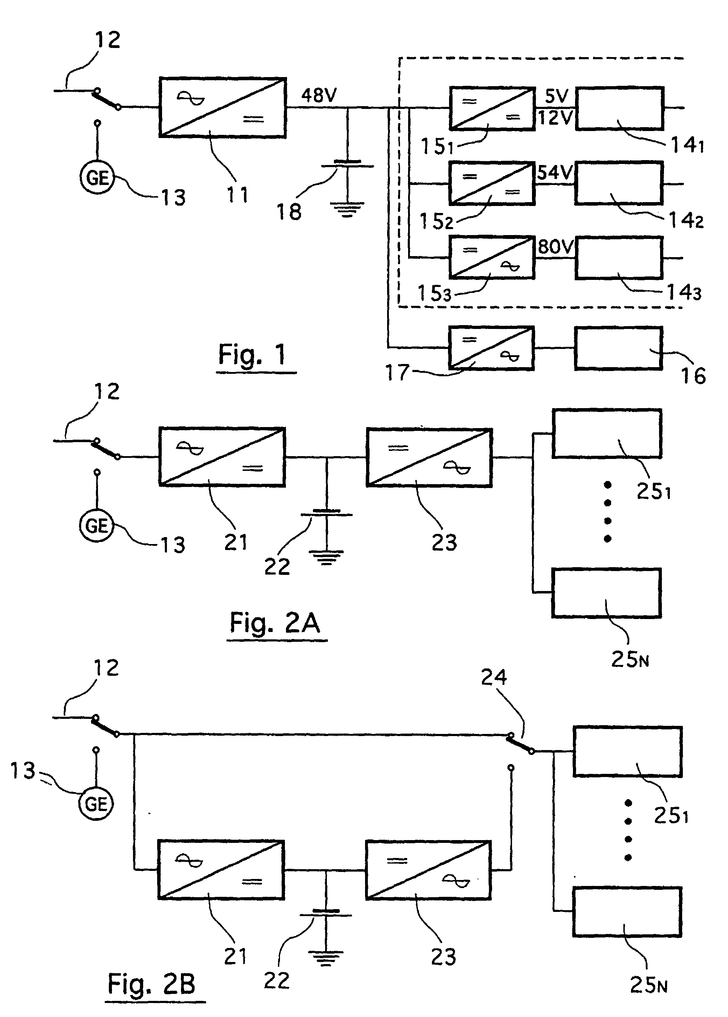

Dans les systèmes de télécommunication actuels, la distribution de l'énergie est assurée selon la technique illustrée en figure 1. Un redresseur 11 en ligne ("on-line") est alimenté par le secteur basse tension 12, ou un groupe électrogène 13. Il délivre une tension continue, par exemple 48 volts aux équipements de télécommunication $14_1$ à $14_3$. Selon les besoins des équipements, on prévoit :

- un convertisseur continu/continu 15, délivrant par exemple des tensions continues de 5 volts et 12 volts ;
- un survolteur $15_2$, délivrant par exemple une tension continue de 54 volts ;
- un onduleur d'appel $15_3$, délivrant par exemple une tension alternative de 80 volts.

Si des périphériques informatiques 16 nécessitant une tension alternative (par exemple 230 V) sont présents, on utilise un onduleur 17.

Enfin, une ou plusieurs batteries 18, chargées par l'énergie délivrée par le redresseur 11, prend automatiquement le relais de l'alimentation, en cas de problème.

Cette technique présente de nombreux inconvénients. Notamment, elle suppose l'utilisation d'un redresseur de forte puissance et entraîne une importante dissipation d'énergie, comme cela apparaîtra plus clairement à la lecture de la table I.

Par ailleurs, les moyens nécessaires sont coûteux et encombrants. Enfin, cette technique impose l'utilisation de câbles électriques de forte section.

On connaît par ailleurs des systèmes d'alimentation alternative sans interruption (ASI), qui sont utilisées pour les équipements alimentés en alternatif, tels que les équipements informatiques.

On distingue deux types d'architectures pour les ASI, illustrées respectivement en figures 2A et 2B, à savoir l'architecture en ligne, ou "on line" (figure 2A) et hors ligne ou "off line" (figure 2B). Le document EP 0.578.531 décrit une telle architecture.

Ces alimentations comprennent:

- un convertisseur alternatif/continu 21 ;
- un dispositif de stockage d'énergie 22 ;
- un convertisseur continu/alternatif 23.

L'inconvénient de ces techniques est qu'elles exigent la présence d'un onduleur 23 capable de délivrer la pleine puissance demandée par les équipements $25_1$ et $25_N$ à alimenter. Cet onduleur 23 constitue la partie la plus coûteuse de l'ASI.

De plus, ces techniques exigent l'utilisation de câbles électriques de distribution de forte section.

Dans le cas de l'alimentation "off line", un permutateur 24 permet de passer de l'alimentation principale à l'alimentation de secours.

En revanche, dans le cas de l'alimentation "on line", l'énergie électrique reçue du secteur 12 ou d'un groupe électrogène 13 traverse systématiquement les deux convertisseurs 21 et 23, ce qui entraîne bien sûr des pertes importantes. De plus, cette technique nécessite un premier étage de conversion alternative/continue 21 fonctionnant à pleine puissance.

L'invention a notamment pour objectif de pallier ces différents inconvénients de l'état de l'art.

Plus précisément, un objectif de l'invention est de fournir un système de distribution d'énergie à des équipements électroniques, qui soit moins coûteux que les systèmes actuels, en ce qui concerne:

- les matériels à mettre en oeuvre ;
- les conducteurs électriques utilisés ; et /ou
- la consommation en énergie électrique.

En d'autres termes, l'invention a notamment pour objectif de fournir un tel système qui permette d'obtenir une forte diminution du coût du Watt d'alimentation.

Un autre objectif de l'invention est de fournir un tel système de distribution d'énergie qui soit aisément évolutif et universel, permettant notamment l'alimentation d'équipements de télécommunication et de traitement de l'information.

L'invention a également pour objectif de fournir un tel système de distribution d'énergie, qui minimise les pertes électriques, par rapport aux systèmes connus.

Encore un autre objectif de l'invention est de fournir un tel système de distribution d'énergie, qui permette d'obtenir une réduction de l'encombrement, par rapport aux systèmes actuels.

Ces objectifs, ainsi que d'autres qui apparaîtront par la suite, sont atteints selon l'invention à l'aide d'un système d'alimentation en énergie électrique d'au moins un équipement électronique, du type comprenant :

- une source d'alimentation principale en énergie électrique alternative, utilisée en régime normal ;
- une unité de stockage d'énergie, utilisée comme source d'alimentation secondaire en énergie électrique continue, en régime de secours ; et
- des moyens de détection d'une défaillance de ladite source d'alimentation principale, commandant le passage en régime de secours ;

à chacun desdits équipements électroniques est associé à un convertisseur d'énergie distinct, délivrant l'alimentation électrique interne nécessaire audit équipement, caractérisé en ce que l'alimentation desdits convertisseurs d'énergie s'effectue:

- directement par ladite source d'alimentation principale, en energie électrique alternative, en régime normal ;
- directement par ladite source d'alimentation secondaire, en énergie électrique continue, en régime de secours.

Par le terme "associer" on entend bien sûr aussi bien le cas où le convertisseur est externe (placé à proximité de l'équipement) ou interne (c'est-à-dire intégré à l'intérieur de l'équipement);

Ainsi, les pertes d'énergie sont fortement réduites : chaque équipement reçoit directement, c'est-à-dire sans l'intermédiaire d'un convertisseur centralisé, l'énergie dont il a besoin, dans un convertisseur qui lui est propre, et qui est adapté à ses besoins.

Cette technique permet la suppression des onduleurs pleine puissance des systèmes d'alimentation classiques, qui sont les éléments les plus coûteux.

Par ailleurs, elle permet de réaliser des ateliers d'énergie alternatifs (UPS) à faible coût, qui conviennent à l'ensemble des matériels informatiques.

Selon un premier mode de réalisation de l'invention, lesdits convertisseurs d'énergie sont alimentés par l'intermédiaire d'un bus d'alimentation unique, connecté sélectivement à ladite source d'alimentation principale ou à ladite source d'alimentation secondaire.

Cette approche permet d'obtenir une architecture particulièrement simple, et donc peu coûteuse.

Selon un second mode de réalisation de l'invention, lesdits convertisseurs d'énergie peuvent être alimentés par l'intermédiaire de deux bus d'alimentation distincts, à savoir un bus d'alimentation principale connecté à ladite source d'alimentation principale et un bus d'alimentation secondaire connecté à ladite source d'alimentation secondaire.

De façon avantageuse, ladite source d'alimentation secondaire délivre une tension continue de l'ordre de la tension de crête de ladite source d'alimentation principale.

Le choix d'une telle tension permet d'une part d'atteindre de très bons rendements, de l'ordre de 95 % à 97 %, et d'autre part d'utiliser des câbles électriques de section réduite:

Préférentiellement, ladite unité de stockage d'énergie est chargée, en régime normal, par l'intermédiaire de ladite alimentation principale.

On peut donc utiliser un chargeur de batteries, à la place des redresseurs en ligne utilisés dans les systèmes connus. Le gain en puissance d'énergie secondaire à installer, et par voie de conséquence en matériel, peut être ainsi réduit d'un facteur 5 à 10 (en fonction de la durée d'autonomie des batteries et du temps de recharge exigé.

Ladite source d'alimentation principale peut notamment appartenir au groupe comprenant le secteur et les groupes électrogènes, et plus généralement toutes les sources d'alimentation alternative.

Par ailleurs, lesdits équipements électroniques peuvent appartenir en particulier au groupe comprenant les équipements de télécommunication et les appareils de traitement de l'information (ou équipements informatiques).

De façon avantageuse, au moins certains desdits convertisseurs comprennent des moyens (PFC) pour conserver en phase la tension et l'intensité de l'énergie électrique interne délivrée à l'équipement auquel ils sont associés.

De tels moyens s'avèrent notamment utiles dans le cas où l'alimentation s'effectue sur un bus unique. Ils permettent de réduire, voire de supprimer, les harmoniques.

L'invention concerne également un procédé d'alimentation en énergie électrique, correspondant au système décrit ci-dessus.

D'autres caractéristiques et avantages de l'invention apparaîtront plus clairement à la lecture de la description suivante d'un mode de réalisation préférentiel, donné à titre de simple exemple illustratif et non limitatif, et des dessins annexés parmi lesquels :

- la figure 1, déjà commentée en préambule, présente schématiquement l'architecture d'alimentation classiquement utilisée dans le domaine des télécommunications ;
- les figures 2A et 2B, également commentées en préambule, illustrent deux modes de réalisation connus d'alimentation alternative sans interruption ;
- la figure 3 présente un système de distribution d'énergie électrique selon l'invention.

D'une façon générale, l'invention repose sur la mise en oeuvre des étapes suivantes :

- association à chacun des équipements électroniques un convertisseur d'énergie distinct, délivrant l'alimentation électrique interne nécessaire à cet équipement ;
- dans un régime normal, alimentation de chacun des convertisseurs d'énergie directement par une source d'alimentation principale en énergie électrique alternative ;
- passage en un régime de secours, en cas de détection d'une défaillance de la source d'alimentation principale ;
- dans le régime de secours, alimentation de chacun des convertisseurs d'énergie directement par une unité de stockage d'énergie, utilisée comme source d'alimentation secondaire en énergie électrique continue.

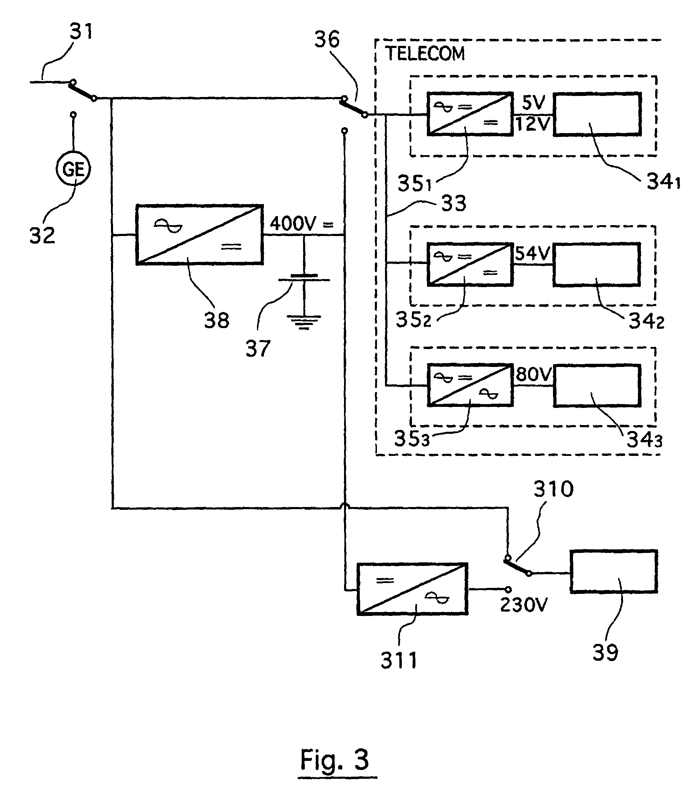

La figure 3 présente un système d'alimentation en énergie électrique selon l'invention, mettant en oeuvre ce procédé.

La source d'alimentation principale, qui est soit le secteur basse tension 31, soit un groupe électrogène 32 alimente directement, un mode normal, un bus de distribution 33, qui alimente lui-même divers équipements de télécommunication $34_1$ à $34_3$, par l'intermédiaire de convertisseurs spécifiques distincts $35_1$ à $35_3$ dédiés à l'équipement correspondant.

Un mode de secours, c'est-à-dire en cas de défaillance des moyens d'alimentation principale 31 et/ou 32, le permutateur 36 bascule sur la batterie 37, qui alimente alors le bus de distribution 33.

Les convertisseurs $35_1$ à $35_3$ sont donc capables de convertir aussi une tension alternative (régime normal) qu'une tension continue (régime de secours). Ils délivrent en sortie les tensions continues et/ou alternatives internes requises par l'équipement $34_1$ à $34_3$.

Ces convertisseurs intègrent préférentiellement des PFC (correcteur de facteur de puissance). Cela permet notamment de respecter les lois et les normes sur les taux d'harmoniques, sans adjonction de coût.

La batterie 37 délivre une tension continue relativement élevée, de 400 V (c'est-à-dire voisine de la tension de crête de la tension alternative délivrée en régime normal), qui permet d'obtenir un rendement supérieur à 95 %, et de réduire le coût des conducteurs de distribution. En effet, la tension de sauvegarde (ou de secours) étant multipliée par un facteur 7 par rapport aux techniques classiques, et les courants divisés dans le même rapport, les sections des câbles peuvent être diminuées dans un rapport de 20 à 50, selon que l'on est limité par le courant ou la chute de tension.

Du fait de cette tension élevée, on prévoit divers éléments pour assurer la sécurité des personnes, et notamment :

- protection sur les convertisseurs et/ou les équipements (mise en place de capot par exemple) ;
- protection sur la distribution, par l'utilisation de câbles à isolation renforcée (câbles grand public) ;
- protection sur l'accès aux batteries (capots, baies, ...).

La batterie 37 est chargée par le chargeur 38, qui est alimentée par l'alimentation principale 31 et/ou 32, en régime normal.

Le système de l'invention permet également l'alimentation d'appareils 39 de traitement de l'information, qui exigent une tension alternative de type secteur.

En régime normal, un second permutateur 310 connecte l'appareil 39 directement sur le secteur. En régime de secours, ce permutateur 310 connecte l'appareil 39 à un onduleur 311 de puissance réduite, car spécifiquement dédié à l'appareil 39. Cet onduleur 311 est alimenté par la batterie 37.

On se propose de comparer le système classique de la figure 1 avec celui de l'invention (figure 3).

En ce qui concerne le système classique, on pose :

- $k = T_{recharge}/T_{autonomie}$, le coefficient de recharge de la batterie, généralement de l'ordre de 5 à 10 ;
- $\eta_c$ le rendement du redresseur 11 ;
- $\eta_0$ le rendement de l'onduleur 17 ;

- PT la puissance nécessaire aux équipements de télécommunication (puissance de l'onduleur) ;
- PI puissance nécessaire pour les équipements informatiques

Les pertes en énergie secondaire en phase de recharge sont :

$$\frac{1-\eta_c}{\eta_c}\left[\frac{1-\eta_0}{\eta_0}PI + PT\right]\frac{1+k}{k}$$

La puissance à installer est donc :

- en onduleur : PI
- eu atelier 48 V :

$$\left[\frac{1}{\eta_0}PI + PT\right]\frac{1+k}{k}$$

Dans le cas du système de l'invention, on a les pertes en énergie secondaire :

$$\cdot\frac{1}{k}\frac{1-\eta_c}{\eta_c}\left[\frac{1-\eta_0}{\eta_0}PI + PT\right]$$

Et la puissance à installer en atelier secondaire est :

$$P_{rech} = \frac{1}{k}\left[\frac{1-\eta_0}{\eta_0}PI + PT\right]$$

Si on considère l'exemple de l'alimentation d'un autocommutateur de 10 kW avec 3 heures d'autonomie et 15 heures de temps de recharge des batteries, on obtient les valeurs approximatives présentées dans la table I ci-dessous.

TABLE I

|  | système classique | invention |
|---|---|---|
| puissance consommée en recharge | 13,5 kW | 12,1 kW |
| puissance de recharge | 2 kW | 2 kW |
| puissance redresseur à installer | 12 kW | 2 kW |
| puissance dissipée par l'énergie secondaire | 1,3 kW en permanence 1,5 kW en recharge | 0 en permanence < 100 W en recharge |
| volume occupé | 1 baie (SAM) | 1 bac standard 8U |
| coût estimé | 120 kF | 20 kF |
| dimension des câbles de distribution | 2 * 16 mm$^2$ | 2 * 1,5 mm$^2$ (câble standard) |
| dimension des câbles de batteries | 2 * 120 mm$^2$ | 2 * 2,5 mm$^2$ |

Bien que ces valeurs soient indicatives, il apparaît clairement que la solution de l'invention est très avantageuse, notamment sur les aspects suivants :

- puissances consommée et dissipée ;
- coût de revient ;
- taille des conducteurs ;
- encombrement.

**Revendications**

1. Système d'alimentation en énergie électrique d'au moins un équipement électronique ($34_1$, $34_2$, $34_3$), du type comprenant :

   - une source d'alimentation principale (31, 32) en énergie électrique alternative, utilisée en régime normal ;
   - une unité de stockage d'énergie (37), utilisée comme source d'alimentation secondaire en énergie électrique continue, en régime de secours ; et
   - des moyens de détection d'une défaillance de ladite source d'alimentation principale, commandant le passage (36) en régime de secours ;

   à chacun desdits équipements électroniques ($34_1$, $34_2$, $34_3$, 39) est associé à un convertisseur d'énergie distinct ($35_1$, $35_2$, $35_3$, 311), délivrant l'alimentation électrique interne nécessaire audit équipement, **caractérisé en ce que** l'alimentation desdits convertisseurs d'énergie s'effectue:

   - directement par ladite source d'alimentation principale (31, 32), en énergie électrique alternative, en régime normal ;
   - directement par ladite source d'alimentation secondaire (37), en énergie électrique continue, en régime de secours.

2. Système d'alimentation selon la revendication 1, **caractérisé** en ce lesdits convertisseurs d'énergie ($35_1$, $35_2$, $35_3$, 311) sont alimentés par l'intermédiaire d'un bus d'alimentation unique (33), connecté sélectivement à ladite source d'alimentation principale (31, 32) ou à ladite source d'alimentation secondaire (37).

3. Système d'alimentation selon la revendication 1, **caractérisé** en ce lesdits convertisseurs d'énergie sont alimentés par l'intermédiaire de deux bus d'alimentation distincts, un bus d'alimentation principale connecté à ladite source d'alimentation principale et un bus d'alimentation secondaire connecté à ladite source d'alimentation secondaire.

4. Système d'alimentation selon l'une quelconque des revendications 1 à 3, **caractérisé en ce que** ladite source d'alimentation secondaire (37) délivre une tension continue de l'ordre de la tension de crète de ladite source d'alimentation principale.

5. Système d'alimentation selon l'une quelconque des revendications 1 à 3, **caractérisé en ce que** ladite unité de stockage d'énergie (37) est chargée, en régime normal, par l'intermédiaire de ladite alimentation principale (31, 32).

6. Système d'alimentation selon l'une quelconque des revendications 1 à 5, **caractérisé en ce que** ladite source d'alimentation principale appartient au groupe comprenant le secteur (31) et les groupes électrogènes (32).

7. Système d'alimentation selon l'une quelconque des revendications 1 à 6, **caractérisé en ce que** lesdits équipements électroniques appartiennent au groupe comprenant les équipements de télécommunication ($34_1$, $34_2$, $34_3$) et les appareils de traitement de l'information (39).

8. Système selon l'une quelconque des revendications 1 à 7, **caractérisé en ce que** qu'au moins certains desdits convertisseurs ($35_1$, $35_2$, $35_3$, 311) comprennent des moyens pour conserver en phase la tension et l'intensité de l'énergie électrique interne délivrée à l'équipement auquel ils sont associés.

9. Procédé d'alimentation en énergie électrique d'au moins un équipement électronique comprenand les étapes suivantes :

- association à chacun desdits équipements électroniques un convertisseur d'énergie distinct, délivrant l'alimentation électrique interne nécessaire audit équipement ;
- dans un régime normal, alimentation de chacun desdits convertisseurs d'énergie directement par une source d'alimentation principale, en énergie électrique alternative ;
- passage en un régime de secours, en cas de détection d'une défaillance de ladite source d'alimentation principale; **caractérisé en ce que**
- dans ledit régime, de secours, l'alimentation de chacun desdits convertisseurs d'énergie s'effectue en energie électrique continue directement par une unité de stockage d'énergie, utilisée comme source d'alimentation secondaire en énergie électrique continue.

**Patentansprüche**

1. System zur Versorgung mit elektrischem Strom von mindestens einer elektronischen Einrichtung ($34_1$, $34_2$, $34_3$), vom Typ, welcher aufweist:

   - eine Hauptversorgungsquelle (31, 32) zur Versorgung mit elektrischem Wechselstrom, die im Normalbetrieb verwendet wird;
   - eine Stromspeichereinheit (37), die im Notbetrieb als Sekundärquelle zur Versorgung mit elektrischem Gleichstrom verwendet wird; und
   - Einrichtungen zur Erfassung eines Ausfalls der Hauptversorgungsquelle, die das Umschalten (36) auf Notbetrieb steuern;

   wobei zu jeder dieser elektronischen Einrichtungen ($34_1$, $34_2$, $34_3$, 39) ein separater Stromrichter ($35_1$, $35_2$, $35_3$, 311) gehört, der die für die jeweilige Einrichtung benötigte interne Stromversorgung liefert, **dadurch gekennzeichnet, dass** die Versorgung der Stromrichter folgendermaßen stattfindet:

   - sie erfolgt im Normalbetrieb direkt durch die Hauptversorgungsquelle (31, 32) mit elektrischem Wechselstrom;
   - sie erfolgt im Notbetrieb direkt durch die Sekundärversorgungsquelle (37) mit elektrischem Gleichstrom.

2. Versorgungssystem nach Anspruch 1, **dadurch gekennzeichnet, dass** die Stromrichter ($35_1$, $35_2$, $35_3$, 311) über einen einzigen Versorgungsbus (33) versorgt werden, der wahlweise mit der Hauptversorgungsquelle (31, 32) oder der Sekundärversorgungsquelle (37) verbunden ist.

3. Versorgungssystem nach Anspruch 1, **dadurch gekennzeichnet, dass** die Stromrichter über zwei separate Versorgungsbusse versorgt werden, und zwar einen Hauptversorgungsbus, der mit der Hauptversorgungsquelle verbunden ist, und einem Sekundärversorgungsbus, der mit der Sekundärversorgungsquelle verbunden ist.

4. Versorgungssystem nach einem der Ansprüche 1 bis 3, **dadurch gekennzeichnet, dass** die Sekundärversorgungsquelle (37) eine Gleichspannung in der Größenordnung der Spitzenspannung der Hauptversorgungsquelle abgibt.

5. Versorgungssystem nach einem der Ansprüche 1 bis 3, **dadurch gekennzeichnet, dass** die Stromspeichereinheit (37) im Normalbetrieb mittels der Hauptversorgungsquelle (31, 32) geladen wird.

6. Versorgungssystem nach einem der Ansprüche 1 bis 5, **dadurch gekennzeichnet, dass** die Hauptversorgungsquelle zur Gruppe gehört, die das Stromnetz (31) und einen Generatorsatz beinhaltet.

7. Versorgungssystem nach einem der Ansprüche 1 bis 6, **dadurch gekennzeichnet, dass** die elektronischen Einrichtungen zur Gruppe gehören, die Telekommunikationseinrichtungen ($34_1$, $34_2$, $34_3$) und Informationsverarbeitungseinrichtungen (39) umfassen.

8. System nach einem der Ansprüche 1 bis 7, **dadurch gekennzeichnet, dass** mindestens bestimmte der Stromrichter ($35_1$, $35_2$, $35_3$, 311) Einrichtungen aufweisen, welche dazu dienen, die Spannung und die Stärke des an die jeweilige zugehörige Einrichtung abgegebenen internen elektrischen Stroms in Phase zu halten.

9. Verfahren zur Versorgung mit elektrischem Strom von mindestens einer elektronischen Einrichtung, welches die folgenden Schritte umfasst:

- jeder dieser elektronischen Einrichtungen wird ein separater Stromrichter zugeordnet, der die für die jeweilige Einrichtung benötigte interne Stromversorgung liefert;
- im Normalbetrieb erfolgt die Versorgung eines jeden der Stromwandler mit elektrischem Wechselstrom direkt über eine Hauptversorgungsquelle;
- im Fall der Erfassung eines Ausfalls der Hauptversorgungsquelle wird auf Notbetrieb umgeschaltet; **dadurch gekennzeichnet, dass**
- im Notbetrieb die Versorgung eines jeden der Stromwandler mit elektrischem Gleichstrom direkt über eine Stromspeichereinheit erfolgt, die als Sekundärquelle zur Versorgung mit elektrischem Gleichstrom verwendet wird.

## Claims

1. An electrical power supply system for powering at least one item of electronic equipment ($34_1$, $34_2$, $34_3$), the system being of the type comprising:

   an AC main power supply (31, 32) used under normal conditions;
   an energy storage unit (37) used as a DC secondary electrical power supply under back-up conditions; and
   means for detecting failure of said main power supply, and for then switching over (36) to a back-up mode;
   each of said items of electronic equipment ($34_1$, $34_2$, $34_3$, 39) is associated with a distinct power converter ($35_1$, $35_2$, $35_3$, 311) delivering the internal electrical power required by said item of equipment, the system being **characterized in that** said power converters are powered:

   directly by said AC main power supply (31, 32) under normal conditions;
   directly by said DC secondary electrical power supply (37) under back-up conditions.

2. A power supply system according to claim 1, **characterized in that** said power converters ($35_1$, $35_2$, $35_3$, 311) are powered via a single power supply bus (33) connected selectively to said main power supply (31, 32) or to said secondary power supply (37).

3. A power supply system according to claim 1, **characterized in that** said power converters are powered via two distinct power supply buses, namely a main power supply bus connected to said main power supply and a secondary power supply bus connected to said secondary power supply.

4. A power supply system according to any one of claims 1 to 3, **characterized in that** said secondary power supply source (37) delivers a DC voltage in the vicinity of the peak voltage of said main power supply.

5. A power supply system according to any one of claims 1 to 3, **characterized in that** said energy storage unit (37) is charged, under normal conditions, via said main power supply (31, 32).

6. A power supply system according to any one of claims 1 to 5, **characterized in that** said main power supply belongs to the group comprising the mains (31) and electricity generator sets (32).

7. A power supply system according to any one of claims 1 to 6, **characterized in that** said items of electronic equipment belong to the group comprising telecommunications equipment ($34_1$, $34_2$, $34_3$) and data-processing apparatus (39).

8. A system according to any one of claims 1 to 7, **characterized in that** at least some of said converters ($35_1$, $35_2$, $35_3$, 311) include means for keeping in phase the voltage and the current of the internal electrical power delivered to the equipment with which they are associated.

9. A method of electrically powering at least one item of electronic equipment, said method comprising the following steps:

   associating each of the items of electronic equipment with a distinct power converter delivering the internal electrical power required by the item of equipment;
   under normal conditions, powering each of the power converters directly by means of an AC main electrical power supply; and

going over to a back-up mode in the event that failure of the main power supply is detected;
the method being **characterized in that**:

in back-up mode, each of said power converters is powered directly by a DC electrical power supply by means of an energy storage unit used as a DC secondary electrical power supply.

Fig. 1

Fig. 2A

Fig. 2B

## Fig. 3